# EUROPEAN PATENT APPLICATION

(11) **EP 4 618 191 A1**
(43) Date of publication of application: **17.09.2025**
(21) Application number: 23925657.1
(22) Date of filing: 03.03.2023
(51) Int. Cl.: H01M 4/485

(54) **SILICON-BASED NEGATIVE ELECTRODE ACTIVE MATERIAL, SECONDARY BATTERY AND ELECTRIC DEVICE**

(71) Applicant: Contemporary Amperex Technology (Hong Kong) Limited, Central (HK)
(72) Inventor: WAN, Shuyun, Ningde, Fujian 352100 (CN); DONG, Xiaobin, Ningde, Fujian 352100 (CN); WANG, Jiazheng, Ningde, Fujian 352100 (CN); YAN, Qingwei, Ningde, Fujian 352100 (CN); LV, Zijian, Ningde, Fujian 352100 (CN)
(74) Representative: Gong, Jinping
(86) International application number: PCT/CN2023/079595
(87) International publication number: WO 2024/182929

(57) **Abstract**

This application provides a silicon-based negative electrode active material. The silicon-based negative electrode active material includes a silicate containing an alkali metal element. The silicon-based negative electrode active material contains element Mg and element Mn.

## Description

### TECHNICAL FIELD

This application relates to the field of battery technologies, and in particular, to a silicon-based negative electrode active material, a secondary battery, and an electrical device.

### BACKGROUND

In recent years, as the application scope of secondary batteries becomes increasingly wider, secondary batteries are widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace.

Silicon-based materials have attracted widespread attention in the industry due to their high capacity. Higher requirements are posed on the electrochemical performance of silicon-based materials. Therefore, a silicon-based negative electrode active material with better performance is still needed in the art.

### SUMMARY

In view of the foregoing issue, this application provides a novel silicon-based negative electrode active material, a secondary battery, and an electrical device, which are respectively described below.

According to a first aspect, this application provides a silicon-based negative electrode active material. The silicon-based negative electrode active material includes a silicate containing an alkali metal element. The silicon-based negative electrode active material contains element Mg and element Mn.

In the foregoing solution, the silicon-based negative electrode active material contains a combination of element Mg and element Mn, and the specific combination improves the cycle capacity retention rate of the silicon-based negative electrode active material. The combination of element Mg and element Mn can achieve an unexpected synergistic effect, and the technical effect achieved by the combination of element S and element Mg is significantly better than the sum of the technical effect achieved by using element S alone and the technical effect achieved by using element Mg alone. Without being limited by the following theory, element Mn has abundant valence states and abundant active sites, which improves the electron conductivity of the negative electrode active material and effectively reduces the direct current resistance (DCR). In addition, the high-strength bonding between element Mg and the silicon oxide material to form a silicate Mg structure can reduce the reaction between the active material and the electrolyte solution, while effectively reducing lithium consumption and effectively improving the cycle capacity retention rate. Therefore, the use of the silicon-based negative electrode active material of this application enables the secondary battery to simultaneously have higher cycle performance and lower resistance.

In some embodiments, the content of element Mg is greater than the content of element Mn. Within the foregoing ratio range, element Mg and element Mn exhibit an unexpected synergistic effect, which further improves a cycle capacity retention rate of the silicon-based negative electrode active material.

In some embodiments, a mass ratio of element Mg to element Mn is greater than or equal to 1.7:1, and optionally ranges from 2.5:1 to 10:1. When the negative electrode active material based on the foregoing solution is used in a battery, the cycle capacity retention rate of the battery is further improved.

In some embodiments, the content of element Mg is 80 ppm or more, and optionally ranges from 100 ppm to 500 ppm. When the negative electrode active material based on the foregoing solution is used in a battery, the cycle capacity retention rate of the battery is further improved.

In some embodiments, the content of element Mn is 200 ppm or less, and optionally ranges from 10 ppm to 100 ppm. When the negative electrode active material based on the foregoing solution is used in a battery, the cycle capacity retention rate of the battery is further improved.

In some embodiments, a volume average particle size Dᵥ50 of the silicon-based negative electrode active material ranges from 4 µm to 10 µm. When the negative electrode active material based on the foregoing solution is used in a battery, the cycle capacity retention rate of the battery is further improved.

In some embodiments, a specific surface area of the silicon-based negative electrode active material is 3 m²/g or less, and optionally ranges from 0.5 m²/g to 2 m²/g. When the negative electrode active material based on the foregoing solution is used in a battery, the cycle capacity retention rate of the battery is further improved.

In some embodiments, a volume resistivity of powder of the silicon-based negative electrode active material under a pressure of 4 MPa is 3 Ω·cm or less, and optionally ranges from 0.5 Ω·cm to 1.5 Ω·cm. When the negative electrode active material based on the foregoing solution is used in a battery, the cycle capacity retention rate of the battery is further improved.

In some embodiments, a compaction density of the silicon-based negative electrode active material under a pressure of 49000 N ranges from 1.4 g/cm³ to 1.8 g/cm³, and optionally ranges from 1.5 g/cm³ to 1.7 g/cm³. When the negative electrode active material based on the foregoing solution is used in a battery, the capacity of the battery is further improved.

In some embodiments, the silicate containing the alkali metal element includes a lithium-containing silicate, and a half-peak width of an X-ray diffraction (XRD) peak of the lithium-containing silicate is less than or equal to 2.0°, and optionally ranges from 0.4° to 1.5°. When the negative electrode active material based on the foregoing solution is used in a battery, the cycle capacity retention rate of the battery is further improved.

In some embodiments, the silicate containing the alkali metal element includes a lithium-containing silicate, and a grain size of the lithium-containing silicate is less than or equal to 20 nm. When the negative electrode active material based on the foregoing solution is used in a battery, the cycle capacity retention rate of the battery is further improved.

In some embodiments, at least a part of a surface of the silicon-based negative electrode active material has a coating layer.

According to a second aspect, this application provides a method for preparing the silicon-based negative electrode active material according to any one of the foregoing embodiments, including:
providing a raw material containing element Si, element O, element Mn, and element Mg;
heating the raw material to form a vapor and then cooling the vapor to form a deposit by vapor deposition;
crushing the deposit to obtain a crushed product; and
reacting the crushed product with an alkali metal source to obtain an alkali metal-containing product.

In some embodiments, the method for preparing the silicon-based negative electrode active material further includes:
performing coating treatment on the alkali metal-containing product, to obtain a product having a coating layer.

In some embodiments, in the operation of heating the raw material to form the vapor, a heating temperature ranges from 1100°C to 1550°C.

In some embodiments, in the operation of cooling the vapor to form the deposit, the cooling temperature ranges from 700°C to 900°C.

According to a third aspect, this application provides a secondary battery, including a negative electrode, where the negative electrode includes the silicon-based negative electrode active material according to any one of the foregoing embodiments.

According to a fourth aspect, this application provides an electrical device, including the secondary battery according to any one of the foregoing embodiments.

### BENEFICIAL EFFECTS

One or more embodiments of this application have one or more of the following beneficial effects.
(1) The combination of element Mg and element Mn can achieve an unexpected synergistic effect, and the technical effect achieved by the combination of element S and element Mg is significantly better than the sum of the technical effect achieved by using element S alone and the technical effect achieved by using element Mg alone.
(2) The battery using the silicon-based negative electrode active material has improved direct current resistance.
(3) The battery using the silicon-based negative electrode active material is used has an improved cycle capacity retention rate.
(4) The battery using the silicon-based negative electrode active material has a high energy density.

### BRIEF DESCRIPTION OF THE DRAWINGS

FIG. 1 is a schematic diagram of a secondary battery according to an embodiment of this application.
FIG. 2 is an exploded view of the secondary battery shown in FIG. 1 according to an embodiment of this application.
FIG. 3 is a schematic diagram of a battery module according to an embodiment of this application.
FIG. 4 is a schematic diagram of a battery pack according to an embodiment of this application.
FIG. 5 is an exploded view of the battery pack shown in FIG. 4 according to an embodiment of this application.
FIG. 6 is a schematic diagram of an electrical device using a secondary battery as a power supply according to an embodiment of this application.

Reference numerals:
1. battery pack; 2. upper box body; 3. lower box body; 4. battery module; 5. secondary battery; 51. housing; 52. electrode assembly; 53. top cover assembly.

### DETAILED DESCRIPTION

Embodiments of a silicon-based negative electrode active material and a method for preparing the same, a positive electrode plate, a negative electrode plate, a secondary battery, a battery module, a battery pack, and a device of this application are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

In this specification, ppm represents parts per million. When being used to describe the content of element Mg or element Mn, ppm means parts per million of the mass of element Mg or element Mn in a silicon-based negative electrode active material relative to the mass of the silicon-based negative electrode active material.

### [Secondary battery]

A secondary battery, or referred to as a rechargeable battery or a storage battery, refers to a battery that can be reused by activating its active material through charging after the battery is discharged.

Generally, the secondary battery includes a positive electrode plate, a negative electrode plate, a separator, and an electrolyte solution. During charging and discharging of the battery, active ions (for example, sodium ions) are intercalated and deintercalated back and forth between the positive electrode plate and the negative electrode plate. The separator is arranged between the positive electrode plate and the negative electrode plate, and mainly serves to prevent a short circuit between the positive electrode and the negative electrode while allowing the active ions to pass through. The electrolyte solution mainly serves to conduct the active ions between the positive electrode plate and the negative electrode plate.

The secondary battery is, for example, a lithium-ion battery. The lithium-ion battery mainly includes a positive electrode, a negative electrode, a separator, and an electrolyte solution. The positive electrode and the negative electrode are separated by the separator to prevent a short circuit. The positive electrode and the negative electrode are infiltrated by the electrolyte solution to ensure ion conduction. During charging, lithium ions are deintercalated from the positive electrode, pass through the separator via the electrolyte solution, and are intercalated into the negative electrode, so that the positive electrode is in a high-potential sodium-deficient state and the negative electrode is in a low-potential sodium-rich state. During discharging, lithium ions are deintercalated from the negative electrode, pass through the separator via the electrolyte solution, and are intercalated into the positive electrode material, so that the positive electrode is restored to a sodium-rich state. To maintain balance of electric charges, a same quantity of electrons are transferred through an external circuit during charging and discharging, and the electrons migrate, together with the lithium ions, between the positive electrode and the negative electrode, respectively causing oxidation reaction and reduction reactions on the positive electrode and the negative electrode. Lithium ions can reversibly migrate between the positive electrode and the negative electrode in the electrolyte solution. Each of the positive electrode and the negative electrode includes an intercalation material that allows lithium ions to be reversibly intercalated and deintercalated.

The secondary battery is, for example, a sodium-ion battery. The sodium-ion battery mainly includes a positive electrode, a negative electrode, a separator, and an electrolyte solution. The positive electrode and the negative electrode are separated by the separator to prevent a short circuit. The positive electrode and the negative electrode are infiltrated by the electrolyte solution to ensure ion conduction. During charging, sodium ions are deintercalated from the positive electrode, pass through the separator via the electrolyte solution, and are intercalated into the negative electrode, so that the positive electrode is in a high-potential sodium-deficient state and the negative electrode is in a low-potential sodium-rich state. During discharging, sodium ions are deintercalated from the negative electrode, pass through the separator via the electrolyte solution, and are intercalated into the positive electrode material, so that the positive electrode is restored to a sodium-rich state. To maintain balance of electric charges, a same quantity of electrons are transferred through an external circuit during charging and discharging, and the electrons migrate, together with the sodium ions, between the positive electrode and the negative electrode, respectively causing oxidation reaction and reduction reactions on the positive electrode and the negative electrode. Sodium ions can reversibly migrate between the positive electrode and the negative electrode in the electrolyte solution. Each of the positive electrode and the negative electrode includes an intercalation material that allows sodium ions to be reversibly intercalated and deintercalated.

### [Negative electrode plate]

The negative electrode plate includes a negative electrode current collector and a negative electrode film layer arranged on at least one surface of the negative electrode current collector. The negative electrode film layer includes a negative electrode active material.

The negative electrode active material in this application is as follows: a silicon-based negative electrode active material, including a silicate containing an alkali metal element, the silicon-based negative electrode active material containing both element Mg and element Mn.

In the foregoing solution, the silicon-based negative electrode active material contains a combination of element Mg and element Mn, and the specific combination improves the cycle capacity retention rate of the silicon-based negative electrode active material. The combination of element Mg and element Mn can achieve an unexpected synergistic effect, and the technical effect achieved by the combination of element S and element Mg is significantly better than the sum of the technical effect achieved by using element S alone and the technical effect achieved by using element Mg alone. Without being limited by the following theory, element Mn has abundant valence states and abundant active sites, which improves the electron conductivity of the negative electrode active material and effectively reduces the direct current resistance (DCR). In addition, element Mg and the silicon oxide material have features of high bonding strength, forming a silicate Mg structure, which can reduce the reaction between the active material and the electrolyte solution, while effectively reducing lithium consumption and effectively improving the cycle capacity retention rate. Therefore, the use of the silicon-based negative electrode active material of this application enables the secondary battery to simultaneously have higher cycle performance and lower resistance.

In some embodiments, the alkali metal element includes one or more of element Li, element Na, and element K. Optionally, the alkali metal element includes element Li. In the foregoing embodiments, the silicon-based negative electrode active material exhibits the improved initial cycle efficiency and the improved cycle capacity retention rate.

In some embodiments, the silicate containing the alkali metal element includes a lithium-containing silicate, and a half-peak width of an X-ray diffraction (XRD) peak of the lithium-containing silicate is less than or equal to 2.0°, and optionally ranges from 0.4° to 1.5°. In the foregoing solution, the cycle capacity retention rate and the direct current resistance (DCR) of the battery are further improved.

In some embodiments, the silicate containing the alkali metal element includes a lithium-containing silicate, and a grain size of the lithium-containing silicate is less than or equal to 20 nm. In the foregoing solution, the cycle capacity retention rate and the direct current resistance (DCR) of the battery are further improved.

In some embodiments, the lithium-containing silicate includes at least one of Li₂Si₂O₅ and Li₂SiO₃.

In some embodiments, element Mg and element Mn are grown in the silicon-based negative electrode active material, for example, grown in the silicon-based negative electrode active material during vapor deposition of the silicon-based negative electrode active material. In some embodiments, element Mg and element Mn are grown in the silicon-based negative electrode active material while being vapor-deposited together with the silicon-based negative electrode active material.

In some embodiments, silicon in the silicon-based negative electrode active material may exist in the form of a plurality of silicon phases including crystalline silicon. Specifically, the silicon phases may be dispersed and uniformly distributed in a matrix.

In some embodiments, the silicon-based negative electrode active material contains at least one of silicon grains and silicon oxide material grains.

In some embodiments, the content of element Mg is greater than the content of element Mn in the silicon-based negative electrode active material. Within the foregoing ratio range, element Mg and element Mn exhibit an unexpected synergistic effect, which further significantly improves a cycle capacity retention rate and direct current resistance (DCR) of the silicon-based negative electrode active material.

In some embodiments, the mass ratio of element Mg to element Mn is 1.7:1 or more in the silicon-based negative electrode active material. Within the foregoing ratio range, element Mg and element Mn exhibit an unexpected synergistic effect, which further significantly improves a cycle capacity retention rate of the negative electrode active material.

In some embodiments, the mass ratio of element Mg to element Mn ranges from 1.7:1 to 25:1 in the silicon-based negative electrode active material. Within the foregoing ratio range, element Mg and element Mn exhibit an unexpected synergistic effect, which further significantly improves a cycle capacity retention rate and direct current resistance (DCR) of the negative electrode active material.

In some embodiments, the mass ratio of element Mg to element Mn ranges from 1.7:1 to 20:1 in the silicon-based negative electrode active material. Within the foregoing ratio range, element Mg and element Mn exhibit an unexpected synergistic effect, which further significantly improves a cycle capacity retention rate and direct current resistance (DCR) of the negative electrode active material.

In some embodiments, the mass ratio of element Mg to element Mn ranges from 1.7:1 to 15:1 in the silicon-based negative electrode active material. Within the foregoing ratio range, element Mg and element Mn exhibit an unexpected synergistic effect, which further significantly improves a cycle capacity retention rate and direct current resistance (DCR) of the negative electrode active material.

In some embodiments, the mass ratio of element Mg to element Mn ranges from 2.5:1 to 10:1 in the silicon-based negative electrode active material. Within the foregoing ratio range, element Mg and element Mn exhibit an unexpected synergistic effect, which further significantly improves a cycle capacity retention rate and direct current resistance (DCR) of the negative electrode active material.

In some embodiments, the mass ratio of element Mg to element Mn in the silicon-based negative electrode active material may be 30:1 or less, 20:1 or less, 15:1 or less, 14:1 or less, 13:1 or less, 12:1 or less, or 10:1 or less. In some embodiments, the mass ratio of element Mg to element Mn in the silicon-based negative electrode active material may be 1.7:1 or more, 2:1 or more, 3:1 or more, 4:1 or more, 5:1 or more, or 6:1 or more. The range of the mass ratio of element Mg to element Mn may be formed by any one of the upper limits and any one the lower limits. Within the foregoing ratio range, element Mg and element Mn exhibit an unexpected synergistic effect, which further significantly improves a cycle capacity retention rate and direct current resistance (DCR) of the negative electrode active material.

In some embodiments, the mass ratio of element Mg to element Mn in the silicon-based negative electrode active material may be 2.5 to 5:1, 2.5 to 10:1, 1.7 to 10:1, 1.7 to 14:1, 1.7 to 15:1, 1.7 to 20:1, 1.7 to 25:1, 2.5 to 10:1, 2.5 to 14:1, 2.5 to 15:1, 2.5 to 20:1, 2.5 to 25:1, 2 to 10:1, 3 to 10:1, 4 to 10:1, 5 to 10:1, 5 to 10:1, 6 to 12:1, and 6 to 15:1.

In some embodiments, the content of element Mg in the silicon-based negative electrode active material is 80 ppm or more. Within the foregoing content range, element Mg and element Mn exhibit an unexpected synergistic effect, which significantly improves a cycle capacity retention rate of the negative electrode active material.

In some embodiments, the content of element Mg in the silicon-based negative electrode active material ranges from 100 ppm to 500 ppm. Based on this, the initial cycle efficiency and the cycle capacity retention rate of the battery are further improved. Within the foregoing content range, element Mg and element Mn exhibit an unexpected synergistic effect, which significantly improves a cycle capacity retention rate of the negative electrode active material.

In some embodiments, the content of element Mg in the silicon-based negative electrode active material ranges from 150 ppm to 400 ppm. Based on this, the initial cycle efficiency and the cycle capacity retention rate of the battery are further improved. Within the foregoing content range, element Mg and element Mn exhibit an unexpected synergistic effect, which significantly improves a cycle capacity retention rate of the negative electrode active material.

In some embodiments, the content of element Mg in the silicon-based negative electrode active material ranges from 150 ppm to 300 ppm. Based on this, the initial cycle efficiency and the cycle capacity retention rate of the battery are further improved. Within the foregoing content range, element Mg and element Mn exhibit an unexpected synergistic effect, which significantly improves a cycle capacity retention rate of the negative electrode active material.

In some embodiments, an upper limit of the content of element Mg in the silicon-based negative electrode active material may be selected from any one of 500 ppm, 400 ppm, 300 ppm, and 200 ppm; and a lower limit of the content of element Mg may be selected from any one of 300 ppm, 200 ppm, 150 ppm, 100 ppm, 80 ppm, and 50 ppm. That is, the range of the content of element Mg may be formed by any one of the upper limits and any one of the lower limits. Within the foregoing content range, element Mg and element Mn exhibit an unexpected synergistic effect, which significantly improves a cycle capacity retention rate of the negative electrode active material.

In some embodiments, the content of element Mg in the silicon-based negative electrode active material may optionally range from 150 ppm to 300 ppm, from 100 ppm to 300 ppm, from 100 ppm to 400 ppm, from 100 ppm to 500 ppm.

In some embodiments, the content of element Mn in the silicon-based negative electrode active material is 200 ppm or less. Based on this, the cycle capacity retention rate of the battery is further improved.

In some embodiments, the content of element Mn in the silicon-based negative electrode active material ranges from 20 ppm to 200 ppm. Based on this, the cycle capacity retention rate of the battery is further improved.

In some embodiments, the content of element Mn in the silicon-based negative electrode active material ranges from 20 ppm to 60 ppm. Based on this, the cycle capacity retention rate of the battery is further improved.

In some embodiments, the content of element Mn in the silicon-based negative electrode active material ranges from 10 ppm to 100 ppm. Based on this, the cycle capacity retention rate of the battery is further improved.

In some embodiments, an upper limit of the content of element Mn in the silicon-based negative electrode active material may be selected from any one of 200 ppm, 100 ppm, 80 ppm, and 60 ppm; and a lower limit of the content of element Mn may be selected from any one of 20 ppm and 30 ppm. That is, the range of the content of element Mn may be formed by any one of the upper limits and any one of the lower limits. Within the foregoing content range, element Mg and element Mn exhibit an unexpected synergistic effect, which further significantly improves a cycle capacity retention rate of the negative electrode active material.

In some embodiments, the content of element Mn in the silicon-based negative electrode active material may optionally range from 20 ppm to 30 ppm, from 20 ppm to 40 ppm, from 20 ppm to 60 ppm, from 30 ppm to 60 ppm, from 30 ppm to 100 ppm, from 30 ppm to 200 ppm, or from 20 ppm to 200 ppm.

In some embodiments, a volume average particle size Dᵥ50 of the silicon-based negative electrode active material ranges from 4 µm to 10 µm, and optionally ranges from 5 µm to 8 µm. In the foregoing solution, the cycle capacity retention rate of the battery is further improved.

In some embodiments, a volume average particle size Dᵥ50 of the silicon-based negative electrode active material is optionally 4 µm or more, further optionally, 5 µm or more, which can reduce film-forming consumption of active ions on the negative electrode, and reduce side reaction of the electrolyte solution on the negative electrode, thereby reducing the irreversible capacity of the secondary battery and improving the cycle performance of the secondary battery; and can also reduce the amount of a binder added in the negative electrode plate, thereby increasing the energy density of the secondary battery. The average particle size Dᵥ50 is optionally 10 µm or less, further optionally 8 µm or less, so that the migration path of active ions and electrons in material particles is shorter, and the migration rate of the ions and the electrons is improved, thereby improving the dynamic performance of the secondary battery. This is also conducive to preventing the silicon-based negative electrode active material from cracking during charging and discharging, thereby further improving the cycle performance of the secondary battery.

In some embodiments, the specific surface area of the silicon-based negative electrode active material is 3 m²/g or less, and optionally ranges from 0.5 m²/g to 2 m²/g. In the foregoing solution, the cycle capacity retention rate of the battery is further improved.

In some embodiments, the specific surface area of the silicon-based negative electrode active material ranges from 0.5 m²/g to 2 m²/g. The specific surface area is optionally 0.5 m²/g or more, so that surfaces of the material particles can have more active sites, which can effectively improve the electrochemical performance of the silicon-based negative electrode active material, to satisfy a requirement of the secondary battery for the dynamic performance. The specific surface area is optionally 2 m²/g or less, which is conducive to reducing the side reaction of the electrolyte solution on the negative electrode, and can also reduce the film-forming consumption of active ions on the negative electrode, thereby reducing the irreversible capacity of the secondary battery and further improving the cycle performance of the secondary battery.

In some embodiments, a volume resistivity of powder of the silicon-based negative electrode active material under a pressure of 4 MPa is 3 Ω·cm or less, and optionally ranges from 0.5 Ω·cm to 1.5 Ω·cm. In the foregoing solution, the direct current resistance (DCR) of the battery is further improved.

In some embodiments, a volume resistivity of powder of the silicon-based negative electrode active material under a pressure of 4 MPa is 3 Ω·cm or less, further optionally, 1.5 Ω·cm or less. When the volume resistivity of powder of the silicon-based negative electrode active material falls within the foregoing range, barriers to the migration of electrons inside the particles can be reduced, so as to improve the dynamic performance of the silicon-based negative electrode active material and reduce polarization of the negative electrode, thereby improving the cycle life of the secondary battery.

In some embodiments, a compaction density of the silicon-based negative electrode active material under a pressure of 49000 N ranges from 1.4 g/cm³ to 1.8 g/cm³, and optionally ranges from 1.5 g/cm³ to 1.7 g/cm³. In the foregoing solution, the energy density of the battery is further improved.

In some embodiments, the silicon-based negative electrode material contains element Si and element O. The molar ratio of element O to element Si is greater than 0 and less than 2, and optionally ranges from 0.2 to 1.8:1, from 0.3 to 1.7:1, from 0.4 to 1.6:1, from 0.6 to 1.5:1, from 0.7 to 1.4:1, from 0.8 to 1.3:1, from 0.9 to 1.2:1, or from 1.0 to 1.1:1.

In some embodiments, at least a part of a surface of the silicon-based negative electrode active material has a coating layer.

In some embodiments, the material of the coating layer includes one or more of a polymer, a carbon material, a metal material, and a metal compound. For example, the coating layer includes one or more of a polymer coating layer, a carbon coating layer, and a metal compound coating layer. Optionally, the polymer may be selected from one or more of polyaniline, polyacetylene, polystyrene, polyacrylonitrile, polyvinyl chloride, and polyethylene. Optionally, the carbon material may include one or more of graphite, mesocarbon microbeads (MCMB), carbon from hydrocarbon pyrolysis, hard carbon, and soft carbon, where the graphite may be one or more of natural graphite and artificial graphite. Optionally, the metal compound may include one or more of Ti₅Si₃, Al₂O₃, and TiO₂. The coating layer can further alleviate the volume expansion effect of the silicon-based negative electrode active material, thereby increasing the cycle life of the material. In addition, the coating layer further serves to protect the silicon-based negative electrode active material, inhibit the side reaction of the electrolyte solution on the surface of the material, and protect the surface of the material from being corroded by the electrolyte solution, so that the silicon-based negative electrode active material has a relatively high capacity, thereby further increasing the cycle life of the battery.

According to a second aspect, this application provides a method for preparing the silicon-based negative electrode active material according to any one of the foregoing embodiments, including:
providing a raw material containing element Si, element O, element Mn, and element Mg;
heating the raw material to form a vapor and then cooling the vapor to form a deposit by vapor deposition;
crushing the deposit to obtain a crushed product; and
reacting the crushed product with an alkali metal source to obtain an alkali metal-containing product.

In some embodiments, the method for preparing the silicon-based negative electrode active material further includes:
performing coating treatment on the alkali metal-containing product, to obtain a product having a coating layer.

In some embodiments, element Si in the raw material may be derived from elemental silicon and a silicon oxide, and element O in the raw material may be derived from a silicon oxide. The elemental silicon includes, for example, metallic silicon. The silicon oxide includes, for example, one or more of silicon monoxide (SiO) and silicon dioxide (SiO₂). The metallic silicon is, for example, any metallic silicon or industrial silicon specified in the standard GB/T 2881-2014. Purity of the elemental silicon is, for example, 3N or more, 4N or more, 5N or more, or 6N or more.

In some embodiments, element Mg in the raw material may be derived from element Mg contained in the elemental silicon or the silicon oxide, or may be derived from a magnesium source added to the raw material.

In some embodiments, element Mn in the raw material may be derived from element Mn contained in the elemental silicon or the silicon oxide, or may be derived from a manganese source added to the raw material.

In some embodiments, an alkali metal element in the raw material may be derived from an alkali metal element contained in the elemental silicon or the silicon oxide, or may be derived from an alkali metal source added to the raw material.

In some embodiments, the raw material contains a magnesium source. Element Mg in the raw material is at least partially derived from the magnesium source. The magnesium source may be selected from one or more of metallic magnesium and a magnesium compound, where the magnesium compound may be selected from one or more of an oxide of magnesium, a carbonate of magnesium, a hydroxide of magnesium, a nitrate of magnesium, and a sulfate of magnesium.

In some embodiments, the raw material contains a manganese source. Element Mn in the raw material is at least partially derived from the manganese source. The manganese source may be selected from one or more of metallic manganese, a manganese alloy, and a manganese compound, where the manganese compound may be selected from one or more of an oxide of manganese, a sulfide of manganese, a carbonate of manganese, a hydroxide of manganese, an acetate of manganese, an oxalate of manganese, a nitrate of manganese, and a sulfate of manganese.

In some embodiments, the alkali metal source may be selected from one or more of elemental alkali metal, an alkali metal alloy, and an alkali metal compound, where the alkali metal compound may be selected from one or more of an oxide of the alkali metal, a sulfide of the alkali metal, a carbonate of the alkali metal, a hydroxide of the alkali metal, an acetate of the alkali metal, an oxalate of the alkali metal, a nitrate of the alkali metal, and a sulfate of the alkali metal.

In some embodiments, the raw material containing element Si, element O, element Mg, and element Mn includes elemental silicon, silicon dioxide, a magnesium source, and a manganese source.

In some embodiments, the content of element Mg in the negative electrode active material is adjusted by adjusting the type and amount of the magnesium source added to the raw material.

In some embodiments, the content of element Mn in the negative electrode active material is adjusted by adjusting the type and amount of the manganese source added to the raw material.

In some embodiments, the content of element Mg in the negative electrode active material is adjusted through one or more means such as mixing multiple types of silicon oxide powder or metallic silicon powder with different content of element Mg and adjusting the type and amount of the magnesium source added.

In some embodiments, the content of element Mn in the negative electrode active material is adjusted through one or more means such as mixing multiple types of silicon oxide powder or metallic silicon powder with different content of element Mn and adjusting the type and amount of the manganese source added.

In some embodiments, the operation of heating the raw material to form the vapor is performed in an inert atmosphere under normal pressure or reduced pressure.

In some embodiments, the operation of cooling the vapor to form the deposit is performed in an inert atmosphere under normal pressure or reduced pressure.

In the foregoing preparation method, the inert atmosphere may be a nitrogen atmosphere, an argon atmosphere, a nitrogen atmosphere, or the like. Optionally, the absolute pressure of the inert atmosphere is normal pressure (1 standard atmosphere) or reduced pressure (less than 1 standard atmosphere). Optionally, the absolute pressure of the inert atmosphere ranges from 10 Pa to 950 Pa, further optionally, from 20 Pa to 100 Pa.

In some embodiments, within the foregoing pressure range of the inert atmosphere, reducing the pressure (i.e., increasing the vacuum degree) can increase the content of element Mg and the content of element Mn in the finally obtained silicon-based negative electrode active material.

In some embodiments, in the operation of heating the raw material to form the vapor, the heating temperature ranges from 1100°C to 1550°C.

In some embodiments, in the operation of cooling the vapor to form the deposit, the cooling temperature ranges from 700°C to 900°C.

In some embodiments, in the operation of cooling the vapor to form the deposit, the cooling temperature may be adjusted to enable the deposit to have a proper crystal structure. Optionally, the cooling temperature ranges from 850°C to 1050°C, which is conducive to enabling the silicon-based negative electrode active material to have a better crystallite size and suitable crystallinity, so that the battery has higher cycle performance. When the cooling temperature is lower than 800°C, the crystallinity of the material may be too low, affecting the material; and when the cooling temperature is higher than 1050°C, the crystallite size of the material may be too large, which affects the cycle performance of the battery.

In some embodiments, within the foregoing heating temperature range, increasing the temperature can increase the content of element Mg and the content of element Mn in the finally obtained silicon-based negative electrode active material.

In some embodiments, within the foregoing pressure range of the inert atmosphere, reducing the pressure, i.e., increasing the vacuum degree, can increase the content of element Mg and the content of element Mn in the finally obtained silicon-based negative electrode active material.

In some embodiments, the operation of crushing the deposit includes: performing coarse crushing, fine crushing, and grading operations on the deposit according to preset parameters including the volume average particle size (Dv50) and the specific surface area of the product, to obtain a product that meets the preset parameters. In some embodiments, the deposit may be crushed and graded by using any method and device known in the art, such as a grinder or a jet milling and grading device.

In some embodiments, the method for preparing the silicon-based negative electrode active material further includes an operation of performing coating treatment on the alkali metal-containing product, to obtain a product having a coating layer.

In some embodiments, the material of the coating layer includes one or more of a polymer, a carbon material, a metal material, and a metal compound. For example, the coating layer includes one or more of a polymer coating layer, a carbon coating layer, and a metal compound coating layer. Optionally, the polymer may be selected from one or more of polyaniline, polyacetylene, polystyrene, polyacrylonitrile, polyvinyl chloride, and polyethylene. Optionally, the carbon material may include one or more of graphite, mesocarbon microbeads (MCMB), carbon from hydrocarbon pyrolysis, hard carbon, and soft carbon, where the graphite may be one or more of natural graphite and artificial graphite. Optionally, the metal compound may include one or more of Ti₅Si₃, Al₂O₃, and TiO₂. The coating layer can further alleviate the volume expansion effect of the silicon-based negative electrode active material, thereby increasing the cycle life of the material. In addition, the coating layer further serves to protect the silicon-based negative electrode active material, inhibit the side reaction of the electrolyte solution on the surface of the material, and protect the surface of the material from being corroded by the electrolyte solution, so that the silicon-based negative electrode active material has a relatively high capacity, thereby further increasing the cycle life of the battery.

In some embodiments, the coating treatment is performed on the surface of the silicon-based negative electrode active material by a liquid phase coating method, to form the coating layer. For example, a polymer is dissolved in a solvent and is fully stirred and uniformly mixed with particles of the silicon-based negative electrode active material, and then the solvent is removed by evaporation, so that the polymer is uniformly coated on the surface of the particles of the silicon-based negative electrode active material.

In some embodiments, the coating treatment is performed on the surface of the silicon-based negative electrode active material by a chemical vapor deposition method, to form the coating layer. For example, a gaseous hydrocarbon compound is introduced into a reaction furnace containing the silicon-based negative electrode active material, and heat treatment is performed under an inert atmosphere to carbonize the hydrocarbon compound to form a coating layer covering the surface of the silicon-based negative electrode active material, thereby obtaining the silicon-based negative electrode active material having a coating layer on its surface.

In some embodiments, the coating treatment includes carbon coating treatment. Optionally, the carbon coating treatment includes the following operations: placing the crushed product in a chamber containing a carbon source gas, heating the crushed product to 700°C to 1000°C, and holding for 1 to 6 hours.

In some embodiments, the coating treatment includes carbon coating treatment. Optionally, the carbon coating treatment includes the following operations: placing the crushed product in a chamber containing a carbon source gas, heating the crushed product to 800°C to 900°C, and holding for 2 to 5 hours.

In some embodiments, the alkali metal source may be one or more of elemental alkali metal, an alkali metal hydroxide, an alkali metal carbonate, an alkali metal nitrate, an alkali metal amide, and an alkali metal hydride.

In some embodiments, the alkali metal source may be one or more of metallic lithium, lithium hydroxide, lithium carbonate, lithium nitrate, lithium amide, and lithium hydride.

By way of example, the negative electrode current collector has two opposite surfaces in a thickness direction thereof, and the negative electrode film layer is arranged on either or both of the two opposite surfaces of the negative electrode current collector.

In some embodiments, the negative electrode current collector may be a metal foil or a composite current collector. For example, the metal foil may be a copper foil. The composite current collector may include a polymer material base layer and a metal layer formed on at least one surface of the polymer material base layer. The composite current collector may be formed by forming a metal material (e.g., copper, a copper alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the negative electrode film layer may further include a silicon-based negative electrode active material known in the art other than that in this application, which may be selected by a person skilled in the art according to actual requirements. By way of example, the silicon-based negative electrode active material known in the art may include, but is not limited to, one or more of artificial graphite, natural graphite, hard carbon, soft carbon, another silicon-based material, and a tin-based material. The another silicon-based material may include one or more of elemental silicon, a silicon-oxygen compound different from that in this application, a silicon-carbon compound, a silicon-nitrogen compound, and a silicon alloy. The tin-based material may include one or more of elemental tin, a tin-oxide compound, and a tin alloy. These materials are commercially available.

In some embodiments, the negative electrode film layer further optionally includes a binder. By way of example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. By way of example, the conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other auxiliary agents, for example, a thickener (such as sodium carboxymethyl cellulose (CMC-Na)).

In some embodiments, the negative electrode plate may be prepared in the following manner. The components for preparing the negative electrode plate, such as the silicon-based negative electrode active material, the conductive agent, the binder, and any other component, are dispersed in a solvent (e.g., deionized water) to form a negative electrode slurry. The negative electrode slurry is coated on the negative electrode current collector, followed by drying, cold pressing, and other processes, to obtain the negative electrode plate.

### [Positive electrode plate]

In some embodiments, the positive electrode plate generally includes a positive electrode current collector and a positive electrode film layer arranged on at least one surface of the positive electrode current collector, and the positive electrode film layer includes a positive electrode active material.

By way of example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be formed by forming a metal material (e.g., aluminum, an aluminum alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the positive electrode film layer further optionally includes a binder. By way of example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. By way of example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner. The components for preparing the positive electrode plate, such as the positive electrode active material, the conductive agent, the binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode plate.

### [Positive electrode active material]

In some embodiments, the positive electrode active material may be a positive electrode active material well-known in the art for use in a secondary battery.

By way of example, the positive electrode active material may include at least one of the following materials: a lithium-containing phosphate of an olivine structure, a lithium transition metal oxide, and respective modified compounds thereof. However, this application is not limited to these materials, and other conventional materials that can be used as a positive electrode active material of a battery may also be used. These positive electrode active materials may be used alone or in combination. Examples of the lithium transition metal oxide may include, but are not limited to, at least one of a lithium-cobalt oxide (e.g., LiCoO₂), a lithium-nickel oxide (e.g., LiNiO₂), a lithium-manganese oxide (e.g., LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (e.g., LiNi_{1/3}Co_{1/3}Mn_{1/3}O₂ (or briefly referred to as NCM₃₃₃), LiNi_{0.5}Co_{0.2}Mn_{0.3}O₂ (or briefly referred to as NCM₅₂₃), LiNi_{0.5}Co_{0.25}Mn_{0.25}O₂ (or briefly referred to as NCM₂₁₁), LiNi_{0.6}Co_{0.2}Mn_{0.2}O₂ (or briefly referred to as NCM₆₂₂), LiNi_{0.8}Co_{0.1}Mn_{0.1}O₂ (or briefly referred to as NCM₈₁₁)), a lithium-nickel-cobalt-aluminum oxide (e.g., LiNi_{0.85}Co_{0.15}Al_{0.05}O₂), and modified compounds thereof. Examples of the lithium-containing phosphate of the olivine structure may include, but are not limited to, at least one of lithium iron phosphate (e.g., LiFePO₄ (or briefly referred to as LFP)), a composite material of lithium iron phosphate and carbon, lithium manganese phosphate (e.g. LiMnPO₄), a composite material of lithium manganese phosphate and carbon, lithium iron manganese phosphate, and a composite material of lithium manganese iron phosphate and carbon.

### [Electrolyte]

The electrolyte serves to conduct ions between the positive electrode plate and the negative electrode plate. The type of the electrolyte is not particularly limited in this application, and may be selected according to requirements. For example, the electrolyte may be in a liquid, gel, or fully-solid state.

In some embodiments, the electrolyte is in a liquid state and includes an electrolyte salt and a solvent.

In some embodiments, the electrolyte salt is selected from sodium perchlorate, sodium hexafluorophosphate, sodium tetrafluoroborate, and sodium hexafluoroarsenate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. By way of example, the additive may include a negative electrode film-forming additive and a positive electrode film-forming additive, and may also include an additive that can improve certain properties of the battery, e.g., an additive that improves the overcharge performance of the battery, an additive that improves the high-temperature performance or low-temperature performance of the battery, etc.

### [Separator]

In some embodiments, the secondary battery further includes a separator. The type of the separator is not particularly limited in this application, and any well-known separator of a porous structure having good chemical stability and mechanical stability may be used.

In some embodiments, the material of the separator may be selected from at least one of glass fiber, non-woven cloth, polyethylene, polypropylene, and polyvinylidene fluoride. The separator may be a single-layer film or a multi-layer composite film, which is not particularly limited herein. When the separator is a multi-layer composite film, the layers may be of the same or different materials, which is not particularly limited herein.

In some embodiments, the positive electrode plate, the negative electrode plate, and the separator may be made into an electrode assembly by a winding process or a lamination process.

In some embodiments, the secondary battery may include an outer package. The outer package may be configured to package the electrode assembly and the electrolyte.

In some embodiments, the outer package of the secondary battery may be a hard housing, such as a hard plastic housing, an aluminum housing, or a steel housing. The outer package of the secondary battery may also be a soft package, such as a pouch-type soft package. The material of the soft package may be plastic, and examples of the plastic include polypropylene, polybutylene terephthalate, polybutylene succinate, and the like.

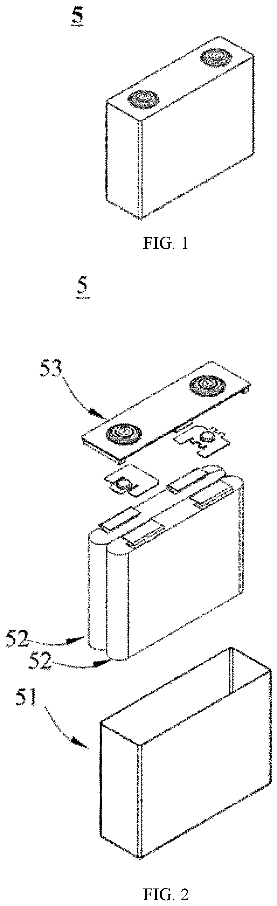

The shape of the secondary battery is not particularly limited in this application, and may be a cylinder, a rectangle, or any other shape. For example, FIG. 1 shows a secondary battery 5 having a rectangle structure as an example.

In some embodiments, referring to FIG. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 can cover the opening, to close the accommodating cavity. The positive electrode plate, the negative electrode plate, and the separator may be made into an electrode assembly 52 by a winding process or a lamination process. The electrode assembly 52 is encapsulated in the accommodating cavity. The electrode assembly 52 is infiltrated by the electrolyte solution. The number of electrode assemblies 52 included in the secondary battery 5 may be one or more, and may be determined by a person skilled in the art according to specific actual requirements.

In some embodiments, the secondary battery may be assembled into a battery module, and the number of secondary batteries included in the battery module may be one or more, which may be specifically determined by a person skilled in the art based on the application and capacity of the battery module.

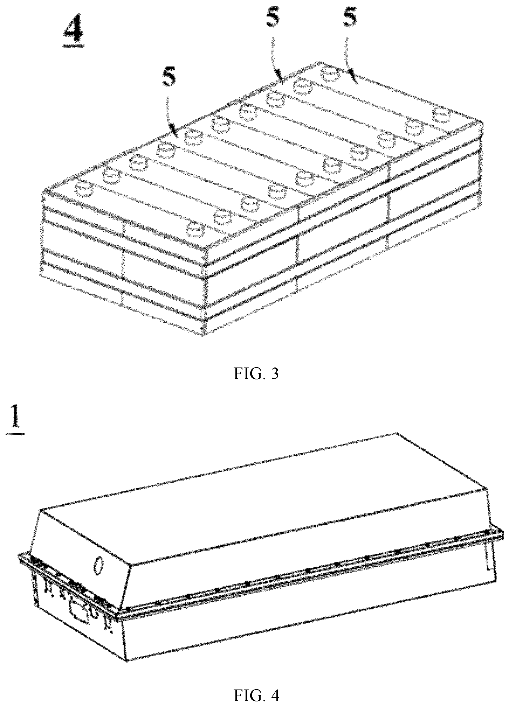

FIG. 3 shows a battery module 4 as an example. Referring to FIG. 3, in the battery module 4, a plurality of secondary batteries 5 may be sequentially arranged in a length direction of the battery module 4. Certainly, the plurality of secondary batteries 5 may also be arranged in any other manner. Further, the plurality of secondary batteries 5 may be fixed by a fastener.

Optionally, the battery module 4 may further include a casing having an accommodating space, and the plurality of secondary batteries 5 are accommodated in the accommodating space.

In some embodiments, the battery module may be further assembled into a battery pack, and the number of battery modules included in the battery pack may be one or more, which may be specifically determined by a person skilled in the art based on the application and capacity of the battery pack.

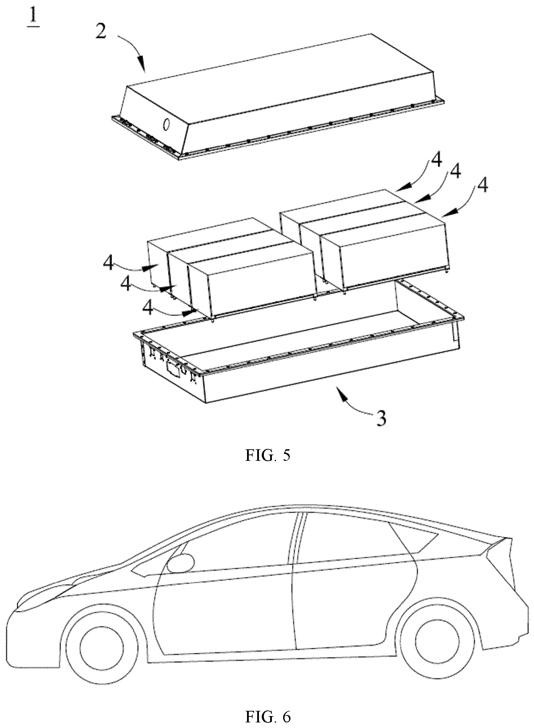

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3, to form an enclosed space for accommodating the battery modules 4. The plurality of battery modules 4 may be arranged in the battery box in any manner.

In addition, this application further provides an electrical device. The electrical device includes at least one of the secondary battery, the battery module, or the battery pack provided in this application. The secondary battery, the battery module, or the battery pack can be used as a power supply of the electrical device, and can also be used as an energy storage unit of the electrical device. The electrical device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

Whether to use the secondary battery, the battery module, or the battery pack may be determined according to use requirements of the electrical device.

FIG. 6 shows an electrical device as an example. The electrical device is a pure electric vehicle, a hybrid electric vehicle, a plug-in hybrid electric vehicle, or the like. To satisfy requirements of the electrical device for high power and a high energy density of the secondary battery, the battery pack or the battery module may be used.

Examples of this application are described below. The examples described below are illustrative, are merely used to explain this application, and should not be construed as a limitation to this application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### 1. Method for preparing a silicon-based negative electrode active material

### 1.1 Overview

In the following specific embodiments, an overview of the method for preparing the negative electrode active material is as follows:
(1) providing a vapor containing element Si, element O, element Mn, and element Mg, and cooling the vapor to obtain a deposit;
(2) crushing the deposit to obtain a crushed product;
(3) performing carbon coating treatment on the crushed product, to obtain a carbon-coated product; and
(4) subjecting the carbon-coated product to a lithiation reaction with a lithium source, and collecting a product, thus obtaining the negative electrode active material.

### 1.2 Detailed description

In the following specific embodiments, the method for preparing the negative electrode active material is described in detail as follows:
(1) providing a raw material composition according to the content of element Mg and the content of element Mn in a target product, where the raw material composition includes elemental silicon, a silicon oxide, a magnesium source (metallic magnesium), and a manganese source (manganese nitrate);
(2) by vapor deposition in a helium atmosphere with an absolute pressure of 30 Pa, heating the raw material composition to 1300°C to form a vapor and cooling the vapor to 950°C to form a deposit;
(3) collecting the deposit and crushing the deposit into powder;
(4) placing the powder in a reaction chamber of a vapor deposition device, introducing a mixture of a carbon source gas (acetylene) and nitrogen containing 20% acetylene by volume into the reaction chamber, heating the mixture to 750°C, and holding for 2 hours, to obtain a carbon-coated product; and
(5) mixing the carbon-coated product with a lithium source (lithium amide) at a mass ratio of 100:30, heating the mixture to 650°C, holding for 2 hours for a lithiation reaction, and collecting a product, thus obtaining the negative electrode active material.

In the preparation method, negative electrode active materials with various content of element Mn and various content of element Mg can be obtained by adaptively adjusting the content of the magnesium source and the content of the manganese source in the raw material mixture according to the composition of the target product. It should be understood that, affected by the purity of elemental silicon and silicon dioxide, a certain amount of element Mg and element Mn is already contained in some elemental silicon and silicon dioxide. In this case, the content of the magnesium source and the content of the manganese source in the raw material mixture should be adaptively adjusted according to the composition of the target product of the sample.

According to the foregoing method, a plurality of negative electrode active material samples (hereinafter briefly referred to as samples) are prepared. These samples have different content of element Mn and different content of element Mg. Details are shown in Table 1. Examples shown in Table 1 include Examples 1 to 11 (E1 to E12) and Comparative Examples 1 to 3 (D1 to D3).

In the foregoing preparation method, silicon-based negative electrode active materials with various content of element Mg and various content of element Mn can be obtained by adaptively adjusting the content of the alkali metal source, the content of the magnesium source, and the content of the manganese source in the raw material mixture according to the composition of the target product. It should be understood that, affected by the purity of elemental silicon and silicon dioxide, a certain amount of element Mg and element Mn is already contained in some elemental silicon and silicon dioxide. In this case, the content of the magnesium source and the content of the manganese source in the raw material mixture should be adaptively adjusted according to the composition of the target product of the sample.

According to the foregoing method, a plurality of silicon-based negative electrode active material samples (hereinafter briefly referred to as samples) are prepared. These samples have different content of element Mg and different content of element Mn. These samples have the following properties.

The silicon-based negative electrode active material is a silicon-based negative electrode active material having a carbon coating layer, where content of the carbon coating layer is 4.2±1%, with the balance being the silicon-based negative electrode active material.

The molar ratio of element O to element Si in the silicon-based negative electrode active material is 1±0.1:1.

Based on the total weight of the silicon-based negative electrode active material, the content of element Li is 7.3±0.5%.

Based on the total weight of the silicon-based negative electrode active material, the content of element Mg is as shown in Table 1.

Based on the total weight of the silicon-based negative electrode active material, the content of element Mn is as shown in Table 1.

The volume average particle size Dv50 of the silicon-based negative electrode active material is 6.5±0.5 µm.

The specific surface area of the silicon-based negative electrode active material is 1.6±0.25 m²/g.

The volume resistivity of powder of the silicon-based negative electrode active material under a pressure of 4 MPa is 1±0.1 Ω·cm.

The compaction density of the silicon-based negative electrode active material under a pressure of 49000 N is 1.6±0.1 g/cm³.

The silicon-based negative electrode active material contains Li₂SiO₃, the half-peak width of the XRD peak of Li₂SiO₃ is 0.7°±0.2°, and the grain size is 13±2 nm.

Table 1 shows silicon-based negative electrode active material samples with different content of element Mg and different content of element Mn.

### Preparation of button battery

(1) Preparation of negative electrode plate: The prepared silicon-based negative electrode active material, a conductive agent Super-P (conductive carbon black), and a binder PAA (polyacrylic acid) were fully stirred and mixed at a mass ratio of 85:5:10 in an appropriate amount of deionized water, to form a homogeneous negative electrode slurry. The negative electrode slurry was coated on a surface of a negative electrode current collector which was a copper foil, followed by drying and cold pressing to obtain a negative electrode plate.
(2) Counter electrode: a metallic lithium plate.
(3) Separator: a polyethylene (PE) film.
(4) Preparation of electrolyte solution: Ethylene carbonate (EC), ethyl methyl carbonate (EMC), and diethyl carbonate (DEC) were mixed at a volume ratio of 1:1:1, LiPF₆ was then uniformly dissolved in the solution to obtain an electrolyte solution, followed by addition of fluoroethylene carbonate (FEC). The concentration of LiPF₆ was 1 mol/L, and the mass percentage of FEC in the electrolyte solution was 6%.
(5) Preparation of button battery: The negative electrode plate, the separator, the metallic lithium plate, and the counter electrode were sequentially stacked, followed by addition of the electrolyte solution, to obtain a button battery.

### [Preparation of secondary battery]

A mixture of the prepared silicon-based negative electrode active material and artificial graphite (at a mass ratio of 15%:85%), carbon black (Super P) as a conductive agent, carbon nanotubes (CNTs), styrene-butadiene rubber as a binder, and sodium carboxymethyl cellulose as a thickener were stirred and mixed thoroughly at a weight ratio of 96.2%:0.7%:0.1%:1.8%:1.2% in an appropriate amount of solvent which was deionized water to form negative electrode slurry. The negative electrode slurry was coated on two surfaces of a negative electrode current collector which was a copper foil, followed by drying and cold pressing to obtain a negative electrode plate.

LiNi_{0.8}Co_{0.1}Mn_{0.1}O₂ (NCM811), Super P as a conductive agent, and polyvinylidene fluoride as a binder were mixed at a weight ratio of 96.5%:1.5%:2%, and an appropriate amount of solvent NMP was added and stirred uniformly to obtain positive electrode slurry. The positive electrode slurry was coated on two surfaces of a positive electrode current collector which was an aluminum foil, followed by drying and cold pressing to obtain a positive electrode plate.

Ethylene carbonate (EC), ethyl methyl carbonate (EMC), and diethyl carbonate (DEC) were mixed at a volume ratio of 1:1:1, LiPF6 was then uniformly dissolved in the solution to obtain an electrolyte solution, followed by addition of fluoroethylene carbonate (FEC). The concentration of LiPF₆ was 1 mol/L, and the mass percentage of FEC in the electrolyte solution was 6%.

A PE separator is used, and the PE separator and the positive electrode plate and the negative electrode plate that are prepared above are placed in order, so that the separator is located between the positive electrode plate and the negative electrode plate to play a role of isolation, followed by winding, to obtain an electrode assembly; and the electrode assembly is put into an outer package and dried, then the electrolyte solution is injected, and after processes such as vacuum encapsulation, standing, formation, aging, and the like are performed, a soft-package secondary battery is obtained, where a battery size is 13.5 cm×6 cm and a capacity is 4 Ah.

### 2. Analysis and test methods

### 2.1. Element analysis (e.g., element Mn, element Mg, element Si, and an alkali metal element)

The content of an element has a meaning well-known in the art, and may be measured using a method known in the art. For example, the silicon-based negative electrode active material is digested with reference to EPA-3052-1996 "Microwave Assisted Acid Digestion of Silicates", and then the content of target elements is measured by using an ICAP-7000 inductively coupled plasma-optical emission spectrometer (ICP-OES) from Thermo Fisher Scientific in accordance with EPA 6010D-2014 "Inductively Coupled Plasma Atomic Emission Spectrometry". The specific test method is as follows: dissolving 0.5 g of the silicon-based negative electrode active material sample in 10 mL of nitric acid and 10 mL of hydrofluoric acid by microwave digestion, adding the solution to a 50 mL volumetric flask to the volume after digestion, and then measuring the content of the target elements by using the ICAP-7000 ICP-OES.

### 2.2 Element analysis (element oxygen and element carbon)

The content of an element has a meaning well-known in the art, and may be measured using a method known in the art. The content of element carbon in the silicon-based negative electrode active material may be measured with reference to GB/T 20123-2006/ISO 15350:2000, using a measurement instrument such as an HCS-140 infrared carbon-sulfur analyzer.

The content of element oxygen may be measured with reference to JY/T 017-1996 "General Rules for Elemental Analyzer Methods", using a measurement instrument such as a rapid OXY cube oxygen analyzer from Elementar.

### 2.3 Volume resistivity

Volume resistivity of a material has a meaning well-known in the art, and may be measured by using an instrument and a method well-known in the art. For example, the volume resistivity of powder of the silicon-based negative electrode active material of this application under a pressure of 4 MPa may be measured using a four-probe method. The measurement method includes: adding powder of the silicon-based negative electrode active material of this application to a sample table, applying a pressure of 4 MPa to the powder through a press, and after the pressure is stable, reading the volume resistivity of the powder of the silicon-based negative electrode active material under the pressure of 4 MPa from a resistivity meter.

### 2.4. Compaction density

The compaction density of a material has a meaning well-known in the art, and may be measured by using an instrument and a method well-known in the art. For example, the compaction density of the material may be measured using an electronic pressure testing machine such as a UTM7305 electronic pressure testing machine with reference to the standard GB/T24533-2009. About 1 g of the sample is accurately weighed and added to a mold having a bottom area of 1.327 cm². A pressure of 49000 N is applied to the sample by using a pressure device, kept for 30 seconds, and then relieved. The height of the sample is measured. As such, the compaction density of the material can be obtained according to a formula ρ=m/(1.327×h). In the formula, ρ represents the compaction density of the material, m represents the mass of the sample, and h represents the height of the sample after the pressure of 49000 N is applied to the sample, kept for 30 seconds, and then relieved.

### 2.4 Analysis of particle size of powder

Dv10, Dv50, and Dv90 of the material has meanings well-known in the art, and may be measured using a method known in the art. For example, Dv10, Dv50, and Dv90 of the material may be measured by using a laser particle size analyzer (e.g., Malvern Master Size 3000) with reference to the standard GB/T 19077-2016.

Physical definition of Dv10, Dv50, and Dv90: D10, D50, and D90 correspond to the particle sizes at which the cumulative volume distribution of the silicon-based negative electrode active material reaches 10%, 50%, and 90%, respectively.

### 2.5 Analysis of specific surface area

The specific surface area of the material has a meaning well-known in the art, and may be measured by using an instrument and a method well-known in the art. For example, with reference to the standard GB/T 19587-2017 "Determination of the specific surface area of solids by gas adsorption using the BET method", a test method for specific surface area analysis by nitrogen adsorption is used for testing, and the specific surface area is calculated using the BET (Brunauer Emmett Teller) method. The test for specific surface area analysis by nitrogen adsorption may be performed by using a Tri Star II 3020 specific surface and porosity analyzer from Micromeritics, US.

### 2.6. Battery performance test

### (1) Cycle capacity retention rate

Under a normal pressure environment at 25°C, the button battery was discharged at a constant current rate of 0.1 C to 0.005 V, then discharged at a constant current rate of 0.04 C to 0.005 V, and then allowed to stand for 5 minutes, at which moment the discharging capacity was recorded as a first-cycle lithium intercalation capacity; the button battery was charged at a constant current rate of 0.1 C to 1.5 V, and then allowed to stand for 5 minutes, thus completing one charging-discharging cycle. The charging capacity at the moment was recorded as a first-cycle lithium deintercalation capacity. The button battery was subjected to 30 charging-discharging cycles according to the foregoing method, and the lithium deintercalation capacity after each cycle was recorded. Cycle capacity retention rate (%) = 30th-cycle lithium deintercalation capacity / first-cycle lithium deintercalation capacity × 100%

### (2) Direct current resistance DCR of the battery

At 25°C, the secondary battery was charged at a constant current of 0.33 C to 4.25 V, then discharged at a constant current of 1 C for 48 minutes, to adjust the battery to 20% SOC, and then allowed to stand for 30 minutes. The voltage of the battery at this moment was recorded as U1. The battery was discharged at a constant current of 3 C for 30 seconds, with a sampling point of 0.1 seconds. The voltage at the end of discharge was recorded as U2. Discharge DCR of the battery at 20% SOC represents initial DCR of the battery. The initial DCR of the battery = (U1-U2) / 3C.

**Table 1**

| | Raw material | | | | Silicon oxide-based compound | | | Button battery performance | |
|---|---|---|---|---|---|---|---|---|---|
| | Elemental silicon /g | SiO₂ /g | Metallic magnesium /g | Manganese nitrate /g | Content of Mg /ppm | Content of Mn /ppm | Mg/Mn Content ratio | Cycle capacity retention rate % | Direct current resistance mΩ |
| E1 | 30 | 60 | 0.0273 | 0.0027 | 300 | 30 | 10.0 | 92.1% | 14.30 |
| E2 | 30 | 60 | 0.0135 | 0.0054 | 150 | 60 | 2.5 | 91.5% | 13.90 |
| E3 | 30 | 60 | 0.0275 | 0.0055 | 300 | 60 | 5.0 | 91.9% | 14.20 |
| E4 | 30 | 60 | 0.0137 | 0.0027 | 150 | 30 | 5.0 | 91.7% | 14.10 |
| E5 | 30 | 60 | 0.0092 | 0.0054 | 100 | 60 | 1.7 | 91.1% | 15.70 |
| E6 | 30 | 60 | 0.0270 | 0.0018 | 300 | 20 | 15.0 | 90.8% | 15.40 |
| E7 | 30 | 60 | 0.0360 | 0.0018 | 400 | 20 | 20.0 | 90.7% | 15.50 |
| E8 | 30 | 60 | 0.0361 | 0.0028 | 400 | 30 | 13.3 | 89.7% | 16.10 |
| E9 | 30 | 60 | 0.0451 | 0.0018 | 500 | 20 | 25.0 | 86.9% | 17.30 |
| E10 | 30 | 60 | 0.0143 | 0.0178 | 150 | 200 | 0.8 | 85.7% | 16.60 |
| D1 | 30 | 60 | 0.0273 | 0 | 300 | None | - | 83.5% | 19.40 |
| D2 | 30 | 60 | 0 | 0.0027 | None | 30 | - | 84.1% | 19.20 |
| D3 | 30 | 60 | 0 | 0 | None | None | - | 80.3% | 19.30 |

### 3. Result and discussion

Table 1 shows components and composition of a raw material of the silicon-based negative electrode active material, the content and content ratio of element Mg and element Mn in the silicon-based negative electrode active material product, and performance of batteries using the silicon-based negative electrode active material as a negative electrode active material according to some embodiments of this application. Discussions are respectively presented below.

### (1) Composition of raw material

Elemental silicon used in the raw materials of the samples (E1 to E10) was metallic silicon 1 (Si≥99.9 wt%, Mg=300 ppm, and Mn=20 ppm).

Elemental silicon used in the raw materials of the samples (D1 to D3) was metallic silicon 2 (Si≥99.9 wt%, including neither Mg nor Mn).

It can be seen from Table 2 that, element Mg and element Mn in the silicon-based negative electrode active material may be derived from a variety of sources.
(a) Element Mg in the silicon-based negative electrode active material may be derived from metallic silicon in the raw material.
(b) Element Mn in the silicon-based negative electrode active material may be derived from metallic silicon in the raw material.
(c) Element Mg in the silicon-based negative electrode active material may be derived from an additionally added magnesium source.
(d) Element Mn in the silicon-based negative electrode active material may be derived from an additionally added manganese source.

A person skilled in the art can adaptively adjust the content of element Mn and the content of element Mg in the raw material according to a target chemical composition of the silicon-based negative electrode active material, to finally obtain a silicon-based negative electrode active material having the target chemical composition. If the content of element Mg in the target silicon-based negative electrode active material needs to be increased or decreased, metallic silicon (or a silicon oxide) with higher or lower content of element Mg may be used, or the amount of the magnesium source additionally added to the raw material may be increased or decreased. If the content of element Mn in the target silicon-based negative electrode active material needs to be increased or decreased, metallic silicon (or a silicon oxide) with higher or lower content of element Mn may be used, or the amount of the manganese source additionally added to the raw material may be increased or decreased.

### (2) Synergistic effect of Mn and Mg

First-week discharge specific capacities of the foregoing samples are basically the same, and are all within a range of 1400 mAh/g±50 mAh/g. Differences between the samples are mainly reflected in the direct current resistance and the cycle capacity retention rate.

The experimental data in Table 1 proves that the combination of Mg and Mn in the negative electrode active material of this application achieved an unexpected synergistic effect.

A detailed analysis is given below with reference to Example E1 and Comparative Examples D1, D2, and D3.

The silicon oxide-based compound in Comparative Example D3 contained no element Mg and element Mn, and had a cycle capacity retention rate value of 80.3%. The silicon oxide-based compound in Comparative Example D1 contained 300 ppm of element Mg but contained no element Mn, and had a cycle capacity retention rate value of 83.5%, which was only 3.2% higher than that in D3. The silicon oxide-based compound in Comparative Example D2 contained 30 ppm of element Mn but contained no element Mg, and had a cycle capacity retention rate value of 84.1%, which was only 3.8% higher than that in D3.

The silicon oxide-based compound in Comparative Example E1 contained both 300 ppm of element Mg and 30 ppm of element Mn, and had a cycle capacity retention rate value of 92.1%, which was 11.8% higher than that in D1. The increase in performance brought by adding both Mg and Mn was much greater than the sum of the increase in performance brought by adding Mg alone and the increase in performance brought by adding Mn alone (i.e., 3.2%+3.8%=7%). Therefore, the foregoing experimental data proves that the combination of Mg and Mn can achieve an unexpected synergistic effect.

### (3) Weight ratio of Mg/Mn in the silicon oxide-based compound

The experimental data in Table 1 also proves that when the weight ratio of Mg/Mn was greater than 1, the performance of the negative electrode active material was significantly improved.

In Example E10, the weight ratio of Mg/Mn was 0.8:1 (<1), and the cycle capacity retention rate of the negative electrode active material was only 85.7%. In Examples E1 to E9, the weight ratio of Mg/Mn was 1.7:1 to 25:1 (>1), and the cycle capacity retention rate of the negative electrode active material was 86.9% to 92.1%, which is higher than that in Example E10. The foregoing experimental data indicates that when the content of Mg in the silicon oxide-based compound is greater than the content of Mn in the silicon oxide-based compound, the silicon oxide-based compound has a more significantly improved cycle capacity retention rate.

### (4) Ratio of Mg/Mn in the silicon oxide-based compound

As shown in Examples E1 to E9, when the weight ratio of Mg/Mn was 1.7:1 to 25:1, the cycle capacity retention rate of the negative electrode active material was 86.9% to 92.1%, indicating a further improved cycle capacity retention rate.

As shown in Examples E1 to E4, when the weight ratio of Mg/Mn was 2.5:1 to 10:1, the cycle capacity retention rate of the negative electrode active material was 91.5% to 92.1%, and a value of direct current resistance ranged from 13.9 mΩ to 14.3 mΩ, indicating a cycle capacity retention rate and direct current resistance that are further improved.

### (5) Content of element Mg and content of element Mn in the silicon oxide-based compound

As shown in Examples E1 to E10, the content of element Mg in the silicon oxide-based compound was 80 ppm or more, for example, 100 ppm to 500 ppm. The negative electrode active material had a cycle capacity retention rate and direct current resistance that are improved.

As shown in Examples E1 to E9, the content of element Mg in the silicon oxide-based compound ranged from 100 ppm to 500 ppm. The negative electrode active material had a cycle capacity retention rate and direct current resistance that are improved.

As shown in Examples E1 to E10, the content of element Mn in the silicon oxide-based compound was 200 ppm or less, for example, 10 ppm to 100 ppm. The negative electrode active material had a cycle capacity retention rate and direct current resistance that are improved.

As shown in Examples E1 to E9, the content of element Mn in the silicon oxide-based compound ranged from 10 ppm to 100 ppm. The negative electrode active material had a cycle capacity retention rate and direct current resistance that are improved.

The foregoing experimental data indicates that when the silicon oxide-based compound contains element Mn or element Mg alone, usually the cycle capacity retention rate is improved, and the improvement is not significant. When the silicon oxide-based compound contains a combination of element Mn and element Mg, the cycle capacity retention rate of the negative electrode active material is significantly improved, indicating that element Mn and element Mg have achieved an unexpected synergistic effect.

It should be noted that this application is not limited to the foregoing embodiments. The foregoing embodiments are exemplary only, and any embodiment having substantially the same technical idea and the same effects within the scope of the technical solutions of this application shall fall within the technical scope of this application. In addition, other embodiments obtained by making various modifications that can be conceived by a person skilled in the art to the embodiments or obtained by combining some of the constituent elements of the embodiments without departing from the scope of the subject matter of this application shall also fall within the scope of this application.

## Claims

1. A silicon-based negative electrode active material, comprising a silicate containing an alkali metal element, the silicon-based negative electrode active material containing element Mg and element Mn.

2. The silicon-based negative electrode active material according to claim 1, wherein the content of element Mg is greater than the content of element Mn.

3. The silicon-based negative electrode active material according to any one of claims 1 and 2, wherein a mass ratio of element Mg to element Mn is greater than or equal to 1.7:1, and optionally ranges from 2.5:1 to 10:1.

4. The silicon-based negative electrode active material according to any one of claims 1 to 3, wherein the content of element Mg is 80 ppm or less, and optionally ranges from 100 ppm to 500 ppm.

5. The silicon-based negative electrode active material according to any one of claims 1 to 4, wherein the content of element Mn is 200 ppm or less, and optionally ranges from 10 ppm to 100 ppm.

6. The silicon-based negative electrode active material according to any one of claims 1 to 5, having one or more of the following features:
(1) a volume average particle size Dᵥ50 of the silicon-based negative electrode active material ranges from 4 µm to 10 µm, and optionally ranges from 5 µm to 8 µm;
(2) a specific surface area of the silicon-based negative electrode active material is 3 m²/g or less, and optionally ranges from 0.5 m²/g to 2 m²/g;
(3) a volume resistivity of powder of the silicon-based negative electrode active material under a pressure of 4 MPa is 3 Ω·cm or less, and optionally ranges from 0.5 Ω·cm to 1.5 Ω·cm;
(4) a compaction density of the silicon-based negative electrode active material under a pressure of 49000 N ranges from 1.4 g/cm³ to 1.8 g/cm³, and optionally ranges from 1.5 g/cm³ to 1.7 g/cm³;
(5) the silicate containing the alkali metal element comprises a lithium-containing silicate, and a half-peak width of an X-ray diffraction (XRD) peak of the lithium-containing silicate is less than or equal to 2.0°, and optionally ranges from 0.4° to 1.5°; and
(6) the silicate containing the alkali metal element comprises a lithium-containing silicate, and a grain size of the lithium-containing silicate is less than or equal to 20 nm.

7. The silicon-based negative electrode active material according to any one of claims 1 to 6, wherein at least a part of a surface of the silicon-based negative electrode active material has a coating layer.

8. A method for preparing the silicon-based negative electrode active material according to any one of claims 1 to 7, comprising:
providing a raw material containing element Si, element O, element Mn, and element Mg;
heating the raw material to form a vapor and then cooling the vapor to form a deposit by vapor deposition;
crushing the deposit to obtain a crushed product; and
reacting the crushed product with an alkali metal source to obtain an alkali metal-containing product.

9. The method according to claim 8, further comprising:
performing coating treatment on the alkali metal-containing product, to obtain a product having a coating layer.

10. The method according to any one of claims 8 and 9, having one or more of the following features:
(1) in the operation of heating the raw material to form the vapor, a heating temperature ranges from 1100°C to 1550°C; and
(2) in the operation of cooling the vapor to form the deposit, a cooling temperature ranges from 700°C to 900°C.

11. A secondary battery, comprising a negative electrode, wherein the negative electrode comprises the silicon-based negative electrode active material according to any one of claims 1 to 7.

12. An electrical device, comprising the secondary battery according to claim 11.
